Europäisches Patentamt

European Patent Office

Office européen des brevets

(11) Publication number: **0 190 029**
**B1**

(12) **EUROPEAN PATENT SPECIFICATION**

(45) Date of publication of patent specification: **04.04.90**

(21) Application number: **86300546.8**

(22) Date of filing: **28.01.86**

(51) Int. Cl.⁵: **F 16 B 21/09**

(54) **A fixing device.**

(30) Priority: **28.01.85 GB 8502083**

(43) Date of publication of application:
**06.08.86 Bulletin 86/32**

(45) Publication of the grant of the patent:
**04.04.90 Bulletin 90/14**

(84) Designated Contracting States:
**AT BE CH DE FR GB IT LI LU NL SE**

(56) References cited:
**DE-A-1 775 737**
**DE-A-3 301 363**
**DE-B-1 959 166**
**GB-A-1 239 405**
**US-A-4 455 723**
**US-A-4 504 167**

(73) Proprietor: **PAUL NORMAN PLASTICS LIMITED**
**Unit S5 Inchbrook Trading Estate Bath Road**
**Woodchester Gloucestershire GL5 5EY (GB)**

(72) Inventor: **Norman, Paul Parfitt**
**Robin Hill 75 Bownham Park**
**Rodborough Stroud, Glos. GL5 5 BZ (GB)**
Inventor: **Weaving, David Robert**
**The Rosary Beeches Green**
**Stroud Glos. GL5 4AA (GB)**

(74) Representative: **Jones, Michael Raymond et al**
**HASELTINE LAKE & CO. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a fixing device and is more particularly concerned with a two-part fixing device, which can be, but need not be, quickly and reliably attached to an intermediate element.

The present invention, relates to fixing devices comprising:

a first part (1) which includes a projecting lug (3) having an enlarged region (4); and

a second part (2) provided with an elongate channel (5) capable of accommodating the enlarged region (4) of the lug (3), the second part (2) including an inclined portion (8) which partially defines the channel (5);

wherein the channel has an opening (7) to permit the enlarged region (4) of the lug (3) to enter the channel (5), and the inclined portion (8) is disposed such that, in use, as the first and second parts (1, 2) are moved translationally with respect to each other and with the enlarged region (4) of the lug (3) moving along the channel (5), the enlarged region (4) of the lugs (3) abuts the inclined portion (8) of the second part (2) so as to tend to urge the first and second parts (1, 2) together. Such a device is disclosed in DE—A—1959166. The subject matter of Claim 1 of the invention is characterized in that; the inclined portion (8) is in the form of a ratchet (9) provided with notches which, in use, engage a corresponding step (10) on the enlarged region (4) of the lug (3) such that the first and second parts (1, 2) may be moved translationally together but not easily separated when attempted to be moved translationally apart.

The enlarged region of the lug may be the free end of the lug. Alternatively, the lug may be provided with one or more enlarged intermediate regions.

Where the lug has more than one enlarged region, the inclined portion engages a corresponding step on one of the enlarged regions.

In one embodiment of the present invention, the first part is provided with two or more of the said lugs, the head region of each lug being capable of being accommodated in a respective channel in the second part, the channels being generally parallel. The channels may, but need not, be adjacent.

In this embodiment of the present invention, there are preferably two of the said lugs with the or each enlarged region of one lug facing the or each enlarged region of the other lug. The enlarged region of each lug being capable of cooperating with the inclined portion of its respective channel. Each of the two channels, which are generally parallel and adjacent, has its inclined portion along the side of that channel which is immediately adjacent the other channel.

Preferably, the opening which permits the enlarged region of the lug to enter the channel or channels is constituted by the channel or channels being open at an end region thereof. Alternatively, the channel or channels may be closed at their end regions instead being provided with an aperture at an intermediate position which permits the enlarged region of the lug to enter its respective channel. The first and second parts, once the lug or lugs have engaged the channel or channels, are moved translationally with respect to each other and the head portion of the lug abuts the inclined portion of the second part so as to urge the first and second parts together. With the ratchet, however, the first and second parts are not easily separated when attempted to be moved translationally apart, as opposed to the device according to DE—A—1959166.

In another embodiment of the present invention, the head region of the lug is enlarged on opposite sides and there are two inclined portions which partially define a single channel (one inclined portion on each side of the channel) disposed such that the head region abuts both inclined portions of the second part. In this embodiment, a single lug cooperates with a single channel whereas in the embodiment previously described, two lugs cooperate with two channels. It is to be appreciated that, in another embodiment, two lugs could cooperate with a single wide channel which would have two inclined portions, one on each side of the channel, disposed such that the enlarged head region of each of the two lugs abuts its respective inclined portion of the wide channel.

The enlarged region of the lug may be at an intermediate position of the lug. In this embodiment, the lugs may be provided with two or more enlarged intermediate regions.

The fixing devices of the present invention may be attached to an intermediate element, which intermediate element is disposed between the first part and the second part (when those two parts are engaged), the intermediate element having one or more apertures through which the or each lug of the first part passes.

The fixing device of the present invention is preferably but not essentially, formed from a plastics material. It is to be appreciated that the fixing device of the present invention may be fabricated from any material having plastic properties, another example being polyvinyl chloride. Preferably, at least one of the first and second parts should be formed of a material having plastic properties so that there is provision for that or those parts formed from the material having plastic properties to flex as the first and second parts are moved translationally with respect to each other to tightly fix the fixing device to the intermediate element or to fix the two parts of the device to each other when no intermediate element is present.

An embodiment of the invention is contemplated wherein one of the parts is formed from a metal, such as steel, and the other of the parts from a material having plastic properties. This would be particularly applicable where the fixing device is intended to be used as, for example, a door knob; here, the actual door knob could be metal and the second part, or backing plate, could be, for example, polypropylene.

If the fixing device of the present invention is to be attached to an intermediate element, holes corresponding to the lugs of the first part are provided at appropriate positions corresponding to the spacing of the lugs of the first part. The lugs of the first part are then positioned through the apertures ready for engagement with channels of the second part. The lug or lugs are aligned in their respective openings in the or each channel and the first part and the second part are then moved translationally with respect to each other so that the head portion of the or each lug moves along the channel, the head portion of the lug abutting the inclined portion of the second part so as to tend to urge the first and second parts together.

Two fixing devices according to the present invention may be used to form the two components of a clip which may be used to attach together two elements. Each of the elements is provided with a fixing device according to the present invention; however, the first part of one clip component attached to one of the elements is in the form of a conventional male clip component and the first part of the other clip component attached to the other element is in the form of a conventional female clip component. The male component and the female component may be engaged by being pushed together so as to hold the two elements. Such an application of the fixing device of the present invention might, for example, be used on a document holder or as a baggage clip. The fixing device possesses the advantage that it can be fixed to the intermediate element simply and quickly and is hence cheap to fit. Furthermore, the two parts of the fixing device are held together very strongly and do not easily come apart. The fixing device of the present invention, unlike a device such as a press stud, does not require a tool in order for it to be fixed to the intermediate element.

The provision of the inclined portion confers considerable versatility on the fixing device of the present invention. In particular, the inclined portion allows a common design of device to be used in conjunction with intermediate elements of greatly varying thickness. For a thicker intermediate element, the lugs do not engage the inclined portion as far along the channel as for a thinner intermediate element. The ability of a particular design of fixing device to accommodate greatly differing thickness of intermediate element is governed by the angle which the inclined portion makes with the channel. A steeper inclined portion will be adaptable to intermediate elements of more widely varying thickness.

In one design, the fixing device will adapt to intermediate elements of from 0.5 to 1 mm. Also considered is a fixing device which will adapt to an intermediate element having a thickness as narrow as, for example, hardboard (approximately 2 to 3 mm) up to a typical thickness of a door, for example, 35 mm.

This versatility is achieved by providing the or each lug with several enlarged regions along the length of the or each lug. The person utilising the fixing device pushes the or each lug of the first part through apertures in the intermediate element and into cooperation with the second part. The or each lug will project through the second part and, in this embodiment, it is therefore necessary that a groove is provided in the base of the channel which the or each lug may project. The first and second parts may then be moved translationally with respect to each other so that the enlargement of the lug which is closest to the inclined portion engages the inclined portion. Once the first and second part have been engaged as far as possible with the particular thickness of intermediate element being employed, the parts of the or each lug projecting through the second part may be cut off to give a flush surface.

The fixing device may be used to hold two intermediate elements together. Here, each intermediate element would have to be provided with spaced apart apertures corresponding to the lugs of the first part.

Other applications of the fixing device include the fixing of a handle to an attaché case (see hereinafter), as a hinge (see hereinafter) and as a clip to suspend printed circuit boards during the etching of such printed circuit boards. Also considered are applications where the first or the second part is formed as part of a handle, for example the handle of a filing cabinet or of other articles of furniture, e.g. cupboard door handles. It would also be possible to construct simple furniture using the fixing device. For example, a leg of a chair could represent the first part, being provided with lugs which pass through apertures in a part of the frame of the chair. The remote ends of the lugs which have been passed through the apertures in the frame would then be engaged with the second part of the fixing device to rigidly attach the leg to the frame of the chair.

For a better understanding of the present invention and to show how the same may be carried into effect, reference will now be made, by way of example, to the accompanying drawings in which:

Figure 1 shows one embodiment of a fixing device according to the present invention, in the form of one half of a two component clip;

Figure 2 shows another embodiment of a fixing device according to the present invention, including the other component of the two component clip of which the first component is shown in Figure 1;

Figure 3 shows a further embodiment of the fixing device of the present invention, as the handle of an attaché case; and

Figure 4 shows yet a further embodiment of the fixing device of the present invention, as a hinge.

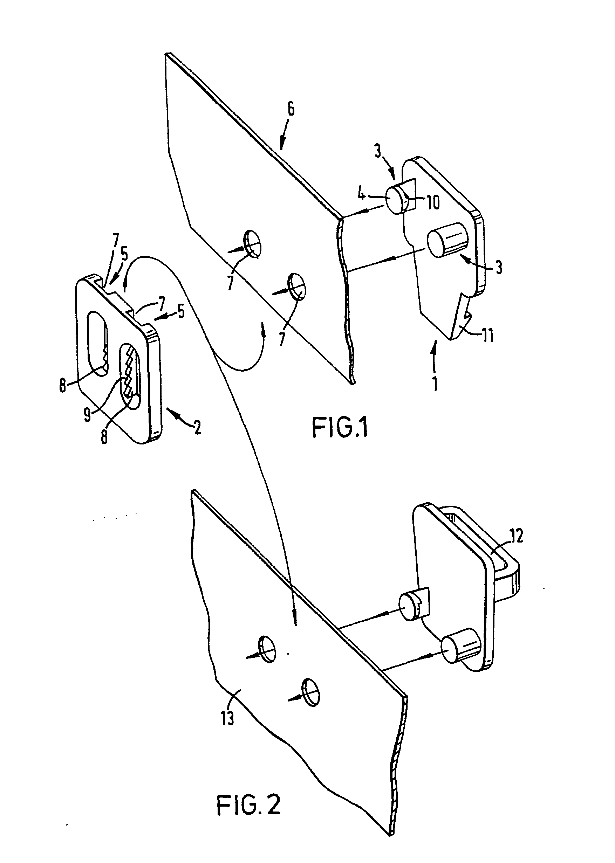

With reference to Figure 1, a two part fixing device comprises a first part 1 and a second part 2. In this embodiment, the first part 1 is provided with two spaced-apart lugs 3. Each lug 3 has an enlarged head region 4, the enlarged head region being generally circular in cross section. The two spaced-apart lugs 3 are adapted to cooperate with two channels 5 in the second part 2.

To attach the fixing device to an intermediate element 6, the intermediate element 6 is provided with two apertures 7 through which the lugs 3 are projected.

With the first part 1 and the second part 2 parallel, the head portion of each lug is placed adjacent an opening 7 in respective channels 5. The first part 1 and second part 2 are then moved translationally with respect to each other so that the head portion 4 of each lug 3 moves into and along its respective channel 5, the head portion 4 of the lug 3 abutting an inclined portion 8 which partially defines the channel. The inclined portion is in the form of a ratchet 9 and a notch of the ratchet 9 engages a step 10 provided on each lug as the first part 1 and second part 2 are moved together. As each lug is moved translationally along its respective channel, the step progressively engages notches of the ratchet 9 and, since the ratchet 9 is inclined, the first part 1 is drawn towards the second part 2 so clamping the intermediate element 6 between the two parts 1 and 2 such that they are not easily separated when attempted to be moved translationally.

The first part 1 is provided with a male clip portion 11 which is adapted to engage a female portion 12 as shown in Figure 2. The female part 12 is held to an intermediate element 13 in the same manner as is described above for the male part. A separate second part 2 as shown in Figure 1 may be used for fixing the first part 1 carrying the male portion 11 and the second part carrying the female portion 12.

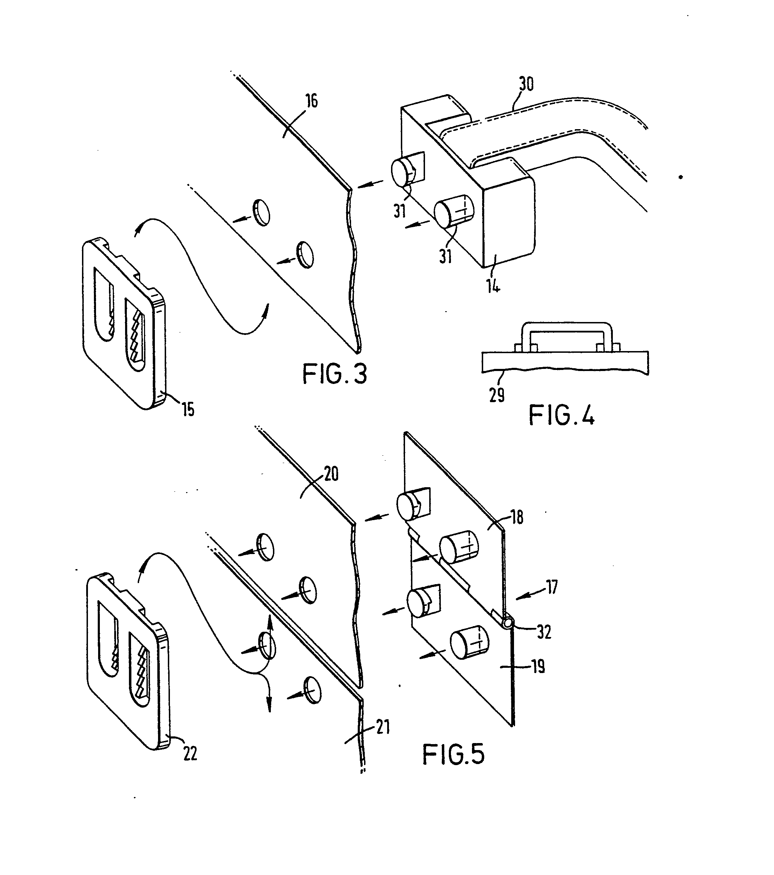

With regard to Figure 3, an embodiment of the invention showing the fixing device being used to fix a handle to an attaché case 29 (Figure 4) is shown. In this embodiment, the first part 14 is fixed to one arm of a handle 30 and a second part 15 is provided to engage the lugs 31 of the first part 14 which project through a wall 16 of the attaché case.

In Figure 5, the application of the fixing device according to the present invention as a hinge is shown. The hinge 17 possesses two elements 18 and 19 each of which corresponds to a first part of a fixing device according to the present invention and as described above. The elements 18 and 19 are rotatable about an axis 32 of the hinge. Each of the members 18 and 19 is fixed to an intermediate element 20, 21 by a second part 22 in a manner as is described above in relation to Figure 1. The hinge is quick and easy to use and is very strong.

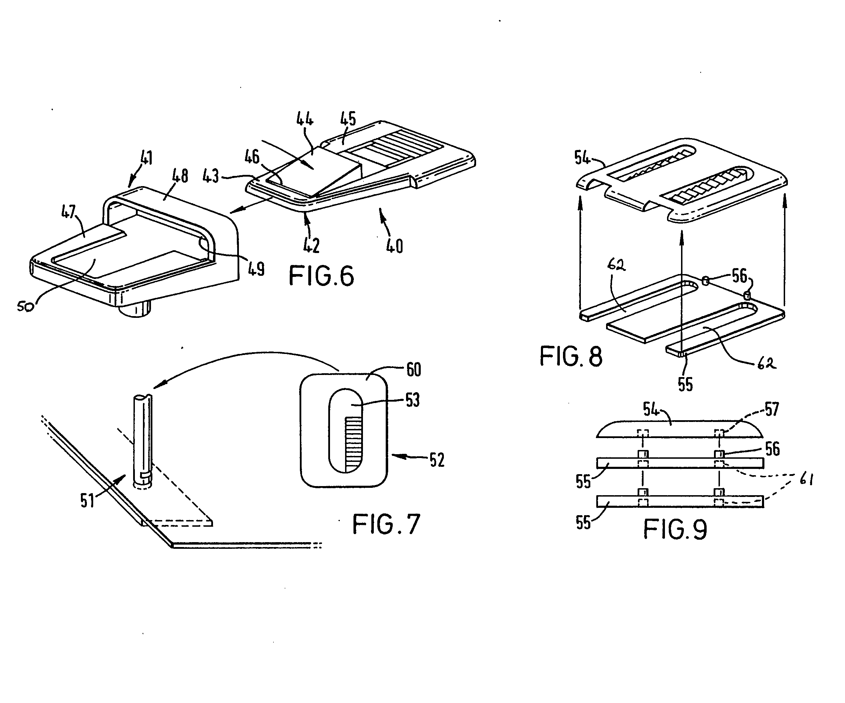

Further reference will now be made, by way of example, to Figures 6 to 9 of the accompanying drawings in which:

Figure 6 shows a further embodiment of a male clip portion and a female clip portion;

Figure 7 shows another embodiment of a fixing device according to this invention;

Figure 8 shows a perspective view of a second part of a fixing device according to this invention in combination with a spacer; and

Figure 9 shows a side view of a second part of a fixing device according to this invention in combination with two spacers.

With reference to Figure 6, a male clip portion 40 and a female clip portion 41 made of a plastics material are shown. Each of the two portions 40, 41 represent a first part according to this invention (respective second parts for each first part 40, 41 have been omitted for clarity). The male portion 40 is adapted at one end 42 releasably to engage the female part 41. Thus, the one end 42 of the male portion 41 is provided with a generally U-shaped bar 43 and a wedge portion 44 which normally stands proud of the upper surface 45 of the male portion 41. The wedged portion 44 is hinged to the U-shaped bar 43 along a forward edge 46. The wedged portion 44 may be depressed by a user in order to bring the wedged portion 44 level with the upper surface 45.

The female portion 41 comprises a body portion 47 and a hooped bar 48 defining an aperture 49 through which the one end 42 of the male portion 40 may be pressed to engage the two portions. The hooped bar 48 is of such a height above the body portion 47 that the one end 42 of the male portion may just pass through the aperture 49 when the wedged portion 44 is depressed; however, when the wedged portion 44 is clear of the hooped bar 48, it springs to a position proud of the upper surface 45 thereby holding the two portions 40, 41 together.

Release of the two portions 40, 41 is achieved by depressing the wedged portion 44 such that it is level with the upper surface 45 of the male portion whereby the one end 42 of the male portion may be retracted from the female portion 41. To facilitate separation of the two portions 40, 41, a recess 50 is provided in the body of the female portion 41. As the wedged portion 44 is depressed, the lower part of that wedged portion 44 is accommodated by the recesss 50 and the wedged portion 44 may be pushed well below the level of the hooped bar 48, thereby permitting easy separation of the two portions 40, 41.

With reference now to Figure 7, a further embodiment of the fixing means comprises a first part 51 and a second part 52. The first part comprises an elognate lug 53 which is shown broken away at one end. In most other respects, the first part 51 is the same as those first parts according to this invention which have already been described. The second part 52 is different in one respect to the other second parts already described. Thus, an opening 53 is provided in the upper surface 60 of the second part 52. The lug 51 is passed through this opening 53 before translational movement of the two parts 51, 52 to urge the parts 51, 52 together. This embodiment of the fixing means may be employed to provide the arms of a conventional ring binder. The elongate lug 53 becomes one arm of the ring binder with an identical adjacent arrangement providing the other arm.

Figures 8 and 9 shows a second part 54 and a spacer 55 to be interposed between the second part 54 and a first part (not shown) when the fixing device is being fixed to an intermediate element which may be relatively thin. The spacer 55 is provided such that the lug(s) of the first part may be of a pre-set length and avoids the necessity to provide first parts having lugs of different lengths which otherwise be needed to permit the fixing device to be used with intermediate elements of differing thickness. The spacer 55 is interposed between the first part and second part 54 when the element to which the fixing device is joined is relatively thin. In effect, the spacer 55 bolsters the intermediate element to the correct thickness for successful operation of the fixing device.

The spacer is shaped, in the embodiment shown, with two slots 62 which permit the lug of the first part (not shown) to extend through the spacer 55 and into a position in which the first and second parts can be urged together. Two projections 56 on the spacer 55 locate in two notches 57 in the underside of the second part 54 to prevent the spacer 55 slipping relative to the second part 54 as the first and second parts are urged together. Notches 61 are also provided in the underside of the spacer 55 so that more than one spacer 55 can be stacked, at the same time being held together.

The fixing device of this invention may also perform a "rivetting" function. In this function, two sheets of an intermediate element intended to be joined together, are each provided with an aperture. A fixing device according to the present invention is used to "rivet" the two elements together by passing the lug of the first part through the apertures in each element, and securing the first part with a second part in accordance with this invention. The fixing device, when performing this function, may be constructed as a male or female portion as has been described above.

## Claims

1. A fixing device comprising:
a first part which includes a projecting lug having an enlarged region; and
a second part provided with an elongate channel capable of accommodating the enlarged region of the lug, the second part including an inclined portion which partially defines the channel;
wherein the channel has an opening to permit the enlarged region of the lug to enter the channel, and the inclined portion is disposed such that, in use, as the first and second parts are moved translationally with respect to each other and with the enlarged region of the lug moving along the channel, the enlarged region of the lug abuts the inclined portion of the second part so as to tend to urge the first and second parts together; characterised in that the inclined portion is in the form of a ratchet provided with notches which, in use, engage a corresponding step on the enlarged region of the lug such that the first and second parts may be moved translationally together, but not easily separated when attempted to be moved apart.

2. A fixing device according to Claim 1, wherein the enlarged region of the lug is the free end of the lug.

3. A fixing device according to Claim 1, wherein the enlarged region of the lug is an intermediate region of the lug.

4. A fixing device according to Claim 3, wherein the lug is provided with two or more enlarged intermediate regions.

5. A fixing device according to Claim 4, wherein the free end of the lug is enlarged.

6. A fixing device according to any one of Claims 1 to 5, wherein the first part is provided with two or more of the said lugs, the head region of each lug being capable of being accommodated in a respective channel in the second part, the channels being generally parallel.

7. A fixing device according to Claim 6, wherein the channels are adjacent.

8. A fixing device according to Claim 6 or 7, wherein there are two of the said lugs and wherein the or each enlarged region of one lug faces its corresponding enlarged region of the other lug.

9. A fixing device according to any one of Claims 1 to 5, wherein the enlarged region of the lug is enlarged on opposite sides of the lug and wherein there are two inclined portions which partially define the channel, one on each side of the channel, disposed such that the enlarged region abuts both inclined portions of the second part.

10. A fixing device according to any preceding Claim, formed from a plastics material.

11. A fixing device according to any one of Claims 1 to 10, further including one or more spacers to be interposed, in use, between the first and second parts, the or each spacer preferably including a slot which corresponds to the channel of the first part.

12. A fixing device according to Claim 11, wherein the spacer is provided with at least one locating lug which locates in a corresponding notch of one of the first part or second part thereby to prevent relative slipping of the spacer and the first or second part.

13. A combination for releasably securing together two intermediate elements, comprising a male portion and a female portion, each of the male and female portions being a fixing device according to any preceeding claim, fixed to an intermediate element, wherein the male portion comprises a hinged tongue which normally stands proud of the surface of the male portion but which can be depressed to the level of, or below, the main surface of the male portion, wherein the female portion defines a slot through which the hinged tongue can be passed releasably to secure the two parts, and wherein there is provided, in the female portion, a recess into which the tongue is capable of being depressed to facilitate separation of the two portions.

14. A method of securing together at least two intermediate elements, which method comprises providing an aperture in each of the at least two intermediate elements, passing the lug of a first part of a fixing means according to any one of Claims 1 to 12 through the aperture, and joining the first part to a second part of a fixing means according to any one of Claims 1 to 12, thereby securing the at least two intermediate elements together.

15. A fixing device according to any one of Claims 1 to 12, wherein an intermediate element is disposed between the first part and the second part, when engaged, the intermediate element having one or more apertures through which the or each lug of the first part passes.

**Patentansprüche**

1. Befestigungsvorrichtung mit einem ersten Teil, welches einen vorstehenden Ansatz mit einem erweiterten Bereich aufweist, und mit einem zweiten Teil, welches mit einer Längsaussparung versehen ist, die den erweiterten Bereich des Ansatzes aufzunehmen imstande ist, wobei das zweite Teil einen abgeschrägten Bereich umfaßt, der teilweise die Aussparung festlegt, wobei die Aussparung eine Öffnung aufweist, um den Eintritt des erweiterten Bereiches des Ansatzes in die Aussparung zu ermöglichen, wobei der abgeschrägte Bereich so angeordnet ist, daß im Gebrauch, wenn das erste Teil und das zweite Teil fortschreitend in bezug aufeinander in Längsrichtung bewegt werden und der erweiterte Bereich des Ansatzes sich längs der Aussparung bewegt, der erweiterte Bereich des Ansatzes an dem abgeschrägten Bereich des zweiten Teiles derart anliegt, daß er dazu neigt, das erste Teil und das zweite Teil zusammenzuzwingen, dadurch gekennzeichnet, daß der abgeschrägte Bereich in Form einer Ratsche vorliegt, die mit Einkerbungen versehen ist, welche beim Gebrauch an einer entsprechenden Stufe an dem erweiterten Bereich des Ansatzes derart anliegen, daß das erste Teil und das zweite Teil gemeinsam fortschreitend bewegt werden können, jedoch nicht leicht trennbar sind, wenn versucht wird, sie voneinander wegzubewegen.

2. Befestigungsvorrichtung nach Anspruch 1, wobei der erweiterte Bereich des Ansatzes des freie Ende des Ansatzes ist.

3. Befestigungsvorrichtung nach Anspruch 1, wobei der erweiterte Bereich des Ansatzes ein Zwischenbereich des Ansatzes ist.

4. Befestigungsvorrichtung nach Anspruch 3, wobei der Ansatz mit zwei oder mehr erweiterten Zwischenbereichen versehen ist.

5. Befestigungsvorrichtung nach Anspruch 4, wobei das freie Ende des Ansatzes erweitert ist.

6. Befestigungsvorrichtung nach irgendeinem der Ansprüche 1 bis 5, wobei das erste Teil mit zwei oder mehreren der betreffenden Ansätze versehen ist, wobei der Kopfbereich jedes Ansatzes in einer entsprechenden Aussparung in dem zweiten Teil aufnehmbar ist und wobei die Aussparungen generell parallel verlaufen.

7. Befestigungsvorrichtung nach Anspruch 6, wobei die Aussparungen benachbart sind.

8. Befestigungsvorrichtung nach Anspruch 6 oder 7, wobei zwei Ansätze vorgesehen sind und wobei der oder jeder erweiterte Bereich des einen Ansatzes seinem entsprechenden erweiterten Bereich des anderen Ansatzes zugewandt ist.

9. Befestigungsvorrichtung nach irgendeinem der Ansprüche 1 bis 5, wobei der erweiterte Bereich des Ansatzes auf gegenüberliegenden Ansatzseiten erweitert ist und wobei zwei abgeschrägte Bereiche, die teilweise die Aussparung festlegen und von denen einer auf jeder Seite der Aussparung vorgesehen ist, derart angeordnet sind, daß der erweiterte Bereich an beiden abgeschrägten Bereichen des zweiten Teiles anliegt.

10. Befestigungsvorrichtung nach irgendeinem vorhergehenden Anspruch, gebildet aus einem Kunststoffmaterial.

11. Befestigungsvorrichtung nach irgendeinem der Ansprüche 1 bis 10, umfassend ferner ein oder mehrere Distanzstücke, die im Gebrauch zwischen das erste Teil und das zweite Teil einzufügen sind und die jeweils vorzugsweise einen Schlitz aufweisen, der der Aussparung des ersten Teiles entspricht.

12. Befestigungsvorrichtung nach Anspruch 11, wobei das Distanzstück mit zumindest einem Führungsansatz versehen ist, der in einer entsprechenden Einkerbung des ersten Teiles oder des zweiten Teiles aufgenommen ist und dadurch ein relatives Verschieben des Distanzstückes und des ersten oder zweiten Teiles verhindert.

13. Kombination zum gemeinsamen lösbaren Festhalten zweier Zwischenelemente, umfassend ein Steckteil und ein Aufnahmeteil, wobei das Steckteil und das Aufnahmeteil jeweils eine Befestigungsvorrichtung nach irgendeinem vorhergehenden Anspruch sind, die an einem Zwischenelement befestigt ist, wobei das Steckteil eine schwenkbare Lasche aufweist, die normalerweise von der Oberfläche des Steckteils absteht, jedoch in die Ebene der Hauptoberfläche des Steckteils oder darunter drückbar ist, wobei das Aufnahmeteil einen Schlitz festlegt, durch den die schwenkbare Lasche lösbar hindurchführbar ist, um die beiden Teile festzuhalten, und wobei in dem Aufnahmeteil eine Ausnehmung vorgesehen ist, in welche die Lasche derart eindrückbar ist, daß die Trennung der beiden Teile erleichtert ist.

14. Verfahren zum gemeinsamen Festhalten zumindest zweier Zwischenelemente, wobei eine Öffnung in jedem der zumindest beiden Zwischenelemente vorgesehen wird, wobei der Ansatz eines ersten Teiles eines Befestigungsmittels gemäß irgendeinem der Ansprüche 1 bis 12 durch die Öffnung hindurchgeführt wird und wobei das erste Teil mit dem zweiten Teil des Befestigungsmittels gemäß irgendeinem der Ansprüche 1 bis 12 derart verbunden wird, daß dadurch die zumindest beiden Zwischenelemente gemeinsam festgehalten sind.

15. Befestigungsvorrichtung nach einem der Ansprüche 1 bis 12, wobei ein Zwischenelement zwischen dem ersten Teil und dem damit in Eingriff stehenden zweiten Teil angeordnet ist, wobei das Zwischenelement eine oder mehrere Öffnungen aufweist, durch die der oder der jeweilige Ansatz des ersten Teiles hindurchgelangt.

**Revendications**

1. Dispositif de fixation comprenant:
une première pièce qui comprend un tenon en saillie comportant une région agrandie; et
une seconde pièce pourvue d'une longue rainure pouvant loger la région agrandie du tenon, la seconde pièce comprenant une portion inclinée qui forme partiellement la rainure;
dans lequel la rainure comporte une ouverture pour permettre à la région agrandie du tenon de pénétrer dans la rainure, et la portion inclinée est disposée de telle sorte que, pendant l'utilisation, lorsque l'on imprime aux première et seconde pièces un mouvement de translation l'une par rapport à l'autre tandis que la région agrandie du tenon se déplace le long de la rainure, la région agrandie du tenon vient porter contre la portion inclinée de la seconde pièce, de manière à avoir tendance à pousser les première et seconde pièces l'une vers l'autre; caractérisé en ce que la portion inclinée se présente sous la forme d'un élément d'encliquetage pourvu d'encoches qui, pendant l'utilisation, viennent en prise avec un cran correspondant se trouvant sur la région agrandie du tenon, de telle sorte que les première et seconde pièce peuvent être déplacées en translation ensemble mais ne peuvent pas être facilement séparées quand on tente de les écarter l'une de l'autre.

2. Dispositif de fixation selon la revendication 1, dans lequel la région agrandie du tenon est l'extrémité libre de ce tenon.

3. Dispositif de fixation selon la revendication 1, dans lequel la région agrandie du tenon est une région intermédiaire du tenon.

4. Dispositif de fixation selon la revendication 3, dans lequel le tenon est pourvu de deux ou plus de deux régions intermédiaires agrandies.

5. Dispositif de fixation selon la revendication 4, dans lequel l'extrémité libre du tenon est agrandie.

6. Dispositif de fixation selon l'une quelconque des revendications 1 à 5, dans lequel la première partie est pourvue de deux ou plus de deux desdits tenons, la région de tête de chaque tenon pouvant être logée dans une rainure correspondante de la seconde pièce, les rainures étant parallèles d'une façon générale.

7. Dispositif de fixation selon la revendication 6, dans lequel les rainures sont adjacentes.

8. Dispositif de fixation selon les revendications 6 ou 7, dans lequel deux desdits tenons sont présents et dans lequel la ou chaque région agrandie d'un tenon se trouve en face de sa région agrandie correspondante de l'autre tenon.

9. Dispositif de fixation selon l'une quelconque des revendications 1 à 5, dans lequel la région agrandie du tenon est agrandie sur les côtés opposés de ce tenon et dans lequel sont présentes deux portions inclinées qui forment partiellement la rainure, en raison d'une sur chaque côté de la rainure, disposée de telle sorte que la région agrandie porte contre les deux portions inclinées de la seconde pièce.

10. Dispositif de fixation selon l'une quelconque des revendications précédentes, le dispositif étant formé par une matière plastique.

11. Dispositif de fixation selon l'une quelconque des revendications 1 à 10, comprenant en outre une ou plusieurs entretoises destinées à être interposées, pendant l'utilisation, entre des première et seconde pièces, l'entretoise ou chaque entretoise comprenant de préférence une fente qui correspond à la rainure de la première pièce.

12. Dispositif de fixation selon la revendication 11, dans lequel l'entretoise est pourvue d'au moins une saillie de calage qui s'encastre dans une encoche correspondante d'une des premières ou secondes pièces de manière à empêcher ainsi un glissement relatif de l'entretoise et de la première ou de la seconde pièces.

13. Combinaison pour fixer de façon libérable l'un à l'autre deux éléments intermédiaires, comprenant une partie mâle et une partie femelle, chacune des parties mâle et femelle étant un dispositif de fixation selon l'une quelconque des revendications précédentes, fixé à un élément intermédiaire, combinaison dans laquelle la partie mâle comprend une languette articulée qui, normalement, fait saillie de la surface de la partie mâle, mais qui peut être enfoncée jusqu'au niveau, ou en dessous du niveau, de la surface principale de la partie mâle, dans laquelle la partie femelle forme une fente à travers laquelle la languette articulée peut être introduite de façon libérable pour assujettir les deux pièces, et dans laquelle il est prévu, dans la partie femelle, un évidement dans lequel la languette peut être enfoncée pour faciliter une séparation des deux parties.

14. Procédé pour fixer l'un à l'autre au moins deux éléments intermédiaires, ce procédé consistant à former une ouverture dans chacun d'au moins deux éléments intermédiaires, à faire passer le tenon d'une première pièce d'un moyen de fixation selon l'une quelconque des revendications 1 à 12 à travers l'ouverture, et à relier la première pièce à une seconde pièce d'un moyen de fixation selon l'une quelconque des revendications 1 à 12, en fixant ainsi mutuellement les deux éléments intermédiaires au nombre d'au moins deux.

15. Dispositif de fixation selon l'une quelconque des revendications 1 à 12, dans lequel un élément intermédiaire est disposé entre la première pièce et la seconde pièce, en prise, l'élément intermédiaire comportant une ou plusieurs ouvertures à travers lesquelles passe le tenon ou chaque tenon de la première pièce.

FIG.1

FIG.2

FIG.3

FIG.4

FIG.5

FIG.6

FIG.7

FIG. 8

FIG.9